# EUROPEAN PATENT APPLICATION

(11) **EP 4 745 832 A1**
(43) Date of publication of application: **20.05.2026**
(21) Application number: 25204403.7
(22) Date of filing: 24.09.2025
(51) Int. Cl.: G06F 40/56, G06N 3/0475

(54) **METHOD AND SYSTEM FOR COMIC STRIP GENERATION USING MULTIAGENT LLM FRAMEWORK**

(30) Priority: 13.11.2024 IN 202421087826
(71) Applicant: Tata Consultancy Services Limited, Mumbai, Maharashtra 400 021 (IN)
(72) Inventor: SRIVASTAVA, Vivek, 110001 Delhi, Delhi (IN); RANJAN, Ashutosh, 411057 Pune, Maharashtra (IN); KARANDE, Shirish Subhash, 411006 Pune, Maharashtra (IN)
(74) Representative: Goddar, Heinz J.

(57) **Abstract**

A method and system for a comic strip generation using a multiagent Large Language Model (LLM) framework is disclosed. The system is an orchestration-based framework, wherein a campaign manager agent (orchestrator) can bidirectionally communicate to other LLM agents at any point of time. Critic agents such as a story critic agent and a script critic agent provide iterative feedback to respective story composer agent and a script composer agent. Elements of comic strip generation such as outline creation, character setting etc. do exist, however, the iterative feedback mechanism as against linear communication of LLM agents of existing methods, which are orchestrated by the campaign manager agent to perform above functionalities enables comic strip generation, which is closest to the intent provided by end user in his/her campaign description, making the created comic strip more effective in achieving the campaign objective.

## Description

### CROSS-REFERENCE TO RELATED APPLICATIONS AND PRIORITY

The present application claims priority from Indian patent application no. 202421087826, filed on 13 November 2024.

### TECHNICAL FIELD

The embodiments herein generally relate to the field of Large Language Models (LLM) and, more particularly, to a method and system for comic strip generation using a multiagent LLM framework

### BACKGROUND

Comic style narration is a widely accepted strategy due to its high potential to creatively engage the audience with the story and the message. However, composing comic campaigns require dedicated and creative efforts from multiple experts throughout the process such as story writers, script writers, graphic designers, visual artists, letterers, etc. Such a setup is often costly and time-consuming.

Rapid developments in Generative Artificial Intelligence (Gen AI) have led to exploring Large Language Models (LLMs) for creating film scripts, comic strips and similar content. Various LLM agents such as story generators, character generators, plot generators to visual generators have been proposed. However, across various existing methods the interaction of LLM agents is linear and the content generation or the comic generation is based on a unidirectional flow that follows the input prompt.

It can be understood that to ensure conversion of human thought into a most appropriate, effective comic creation needs reviews and changes at various stages of the creation pipeline. This focus seems to be missing in existing methods, which leads to a not so effective or not so desired output.

### SUMMARY

Embodiments of the present disclosure present technological improvements as solutions to one or more of the above-mentioned technical problems recognized by the inventors in conventional systems.

For example, in one embodiment, a method for comic strip generation is provided. The method includes receiving, by a campaign manager agent of a multiagent LLM framework, a campaign description prompt to generate a comic strip, wherein the campaign manager agent orchestrates the communication among a plurality of LLM agents of the multiagent LLM framework comprising a story composer agent, a story critic agent, a script composer agent, a script critic agent, and a visual narrative composer agent of the multiagent LLM framework in accordance with a set of predefined roles and responsibilities of the plurality of LLM agents.

Further, the method includes composing, a story by the story composer agent, based on i) a subset defined for the story composer agent from among the set of predefined roles and the responsibility and ii) a contextual knowledge base, wherein the contextual knowledge base comprises a plurality of options for a story narrative structure, a character database comprising a plurality of characters, and a plurality of types of speech bubble, wherein the subset for the story composer agent is defined in accordance with the campaign description.

Further, the method includes reviewing, the composed story by the story critic agent, based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story, wherein reviewing the composed story is an iterative process comprising a plurality of revisions performed on the composed story by the story composer agent, the story critic agent and the campaign manager agent to generate the approved story.

Furthermore, the method includes generating, a script by the script composer agent, based on the approved story, wherein generating the script comprises: decomposing the approved story into a set of panels; defining the setting in which the scene corresponding to each panel among the set of panels is executed with each panel defined by a header specifying scene location for the comic story and a scene prompt, defining a plurality of dialogues of each character selected from among the plurality of characters for each panel, and defining a type of speech bubble from among the plurality of types of speech bubble for each of the plurality of dialogues.

Further, the method includes reviewing the generated script by the script critic agent, via an iterative process comprising a plurality of revisions performed on the generated script by the script composer agent, in accordance with inputs from the script critic agent and the campaign manager agent to generate a reviewed script.

Further, the method includes generating, for each panel, a visual narrative plan by the visual narrative composer, based on the reviewed script, the visual narrative plan comprising setting of a scene for the subset of characters, the plurality of dialogues, and a layout for a selected type of speech bubble for each of the plurality of dialogues.

Furthermore, the method includes recommending the visual narrative plan to a comic campaign creator post review and approval by the campaign manager, for generating the comic strip.

Further, the comic strip is generated for the received campaign description prompt based on the comic campaign creator reviewed visual narrative plan of each panel. The visual narration plan is visualized by a graphics illustrator comprising a text to image generator, and a letterer by placing the selected type of speech bubble as per layout along with the dialogues recommendation in each panel of the comic strip.

In another aspect, a system for comic strip generation is provided. The system comprises a memory storing instructions; one or more Input/Output (I/O) interfaces; and one or more hardware processors coupled to the memory via the one or more I/O interfaces, wherein the one or more hardware processors are configured by the instructions to receive, by a campaign manager agent of a multiagent LLM framework, a campaign description prompt to generate a comic strip, wherein the campaign manager agent orchestrates the communication among a plurality of LLM agents of the multiagent LLM framework comprising a story composer agent, a story critic agent, a script composer agent, a script critic agent, and a visual narrative composer agent of the multiagent LLM framework in accordance with a set of predefined roles and responsibilities of the plurality of LLM agents.

Further, the system is configured to compose, a story by the story composer agent, based on i) a subset defined for the story composer agent from among the set of predefined roles and the responsibility and ii) a contextual knowledge base, wherein the contextual knowledge base comprises a plurality of options for a story narrative structure, a character database comprising a plurality of characters, and a plurality of types of speech bubble, wherein the subset for the story composer agent is defined in accordance with the campaign description.

Further, the system is configured to review, the composed story by the story critic agent, based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story, wherein reviewing the composed story is an iterative process comprising a plurality of revisions performed on the composed story by the story composer agent, the story critic agent and the campaign manager agent to generate the approved story.

Furthermore, the system is configured to generate, a script by the script composer agent, based on the approved story, wherein generating the script comprises: decomposing the approved story into a set of panels; defining the setting in which the scene corresponding to each panel among the set of panels is executed with each panel defined by a header specifying scene location for the comic story and a scene prompt, defining a plurality of dialogues of each character selected from among the plurality of characters for each panel, and defining a type of speech bubble from among the plurality of types of speech bubble for each of the plurality of dialogues.

Further, the system is configured to review the generated script by the script critic agent, via an iterative process comprising a plurality of revisions performed on the generated script by the script composer agent, in accordance with inputs from the script critic agent and the campaign manager agent to generate a reviewed script.

Further, the system is configured to generate, for each panel, a visual narrative plan by the visual narrative composer, based on the reviewed script, the visual narrative plan comprising setting of a scene for the subset of characters, the plurality of dialogues, and a layout for a selected type of speech bubble for each of the plurality of dialogues.

Furthermore, the system is configured to recommend the visual narrative plan to a comic campaign creator post review and approval by the campaign manager, for generating the comic strip.

Further, the comic strip is generated by the system for the received campaign description prompt based on the comic campaign creator reviewed visual narrative plan of each panel. The visual narration plan is visualized by a graphics illustrator comprising a text to image generator, and a letterer by placing the selected type of speech bubble as per layout along with the dialogues recommendation in each panel of the comic strip.

In yet another aspect, there are provided one or more non-transitory machine-readable information storage mediums comprising one or more instructions, which when executed by one or more hardware processors causes a method for comic strip generation.

The method includes receiving, by a campaign manager agent of a multiagent LLM framework, a campaign description prompt to generate a comic strip, wherein the campaign manager agent orchestrates the communication among a plurality of LLM agents of the multiagent LLM framework comprising a story composer agent, a story critic agent, a script composer agent, a script critic agent, and a visual narrative composer agent of the multiagent LLM framework in accordance with a set of predefined roles and responsibilities of the plurality of LLM agents.

Further, the method includes composing, a story by the story composer agent, based on i) a subset defined for the story composer agent from among the set of predefined roles and the responsibility and ii) a contextual knowledge base, wherein the contextual knowledge base comprises a plurality of options for a story narrative structure, a character database comprising a plurality of characters, and a plurality of types of speech bubble, wherein the subset for the story composer agent is defined in accordance with the campaign description.

Further, the method includes reviewing, the composed story by the story critic agent, based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story, wherein reviewing the composed story is an iterative process comprising a plurality of revisions performed on the composed story by the story composer agent, the story critic agent and the campaign manager agent to generate the approved story.

Furthermore, the method includes generating, a script by the script composer agent, based on the approved story, wherein generating the script comprises: decomposing the approved story into a set of panels; defining the setting in which the scene corresponding to each panel among the set of panels is executed with each panel defined by a header specifying scene location for the comic story and a scene prompt, defining a plurality of dialogues of each character selected from among the plurality of characters for each panel, and defining a type of speech bubble from among the plurality of types of speech bubble for each of the plurality of dialogues.

Further, the method includes reviewing the generated script by the script critic agent, via an iterative process comprising a plurality of revisions performed on the generated script by the script composer agent, in accordance with inputs from the script critic agent and the campaign manager agent to generate a reviewed script.

Further, the method includes generating, for each panel, a visual narrative plan by the visual narrative composer, based on the reviewed script, the visual narrative plan comprising setting of a scene for the subset of characters, the plurality of dialogues, and a layout for a selected type of speech bubble for each of the plurality of dialogues.

Furthermore, the method includes recommending the visual narrative plan to a comic campaign creator post review and approval by the campaign manager, for generating the comic strip.

Further, the comic strip is generated for the received campaign description prompt based on the comic campaign creator reviewed visual narrative plan of each panel. The visual narration plan is visualized by a graphics illustrator comprising a text to image generator, and a letterer by placing the selected type of speech bubble as per layout along with the dialogues recommendation in each panel of the comic strip.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for a comic strip generation using a multiagent Large Language Model (LLM) framework, in accordance with some embodiments of the present disclosure.
FIG. 1B illustrates an architectural overview of the system of FIG. 1A, in accordance with some embodiments of the present disclosure.
FIGS. 2A through 2B (collectively referred as FIG. 2) is a flow diagram illustrating a method for the comic strip generation using the multiagent LLM framework, using the system depicted in FIG. 1A and 1B, in accordance with some embodiments of the present disclosure.
FIGS. 3A and 3B (collectively referred as FIG. 3) are example illustrations comic strips generated by the system of FIG. 1 for a campaign description received from the comic campaign creator, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for a comic strip generation using a multiagent Large Language Model (LLM) framework, which is an orchestration-based framework, wherein a campaign manager agent (orchestrator) can have two-way communication with other LLM agents at any point of time. Critic agents such as a story critic agent and a script critic agent provide iterative feedback to respective story composer agent and a script composer agent. Elements of comic strip generation such as outline creation, character setting etc. do exist, however, the iterative feedback mechanism as against linear communication of LLM agents of existing methods, which are orchestrated by the campaign manager agent to perform above functionalities enables comic strip generation, which is closest to the intent provided by end user in his/her campaign description, making the created comic strip more effective in achieving the campaign objective.

It can be understood that the term campaign herein refers to the intent of user provided via the text description to the system, so as to be reflected and covered by the generated comic strip. An example of the campaign could be an email campaign with specific user intent.

The multiagent LLM framework disclosed herein further enables Human-AI collaboration wherein a comic campaign creator (human) leverages the recommendations from the multi-agent narration planner to visualize the narration with graphics illustrator and letterer. The comic campaign creator could be a single individual or a team of creators who can leverage the recommendations from the system comprising the multiagent LLM framework to finally visualize the narration with graphics illustrator and letterer. The comic campaign creator can edit the recommendations provided by the multi-agent narration planner on multiple dimensions such as story, setting, dialogues and characters selected. The comic campaign creator throughout the process receives crucial recommendations from the system on creating story narration, aesthetic graphic illustration, and dialogues along with the relevant speech bubble layout across panels for effective narration of campaigns.

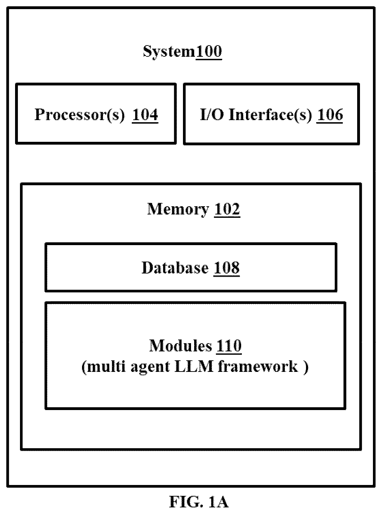

Referring now to the drawings, and more particularly to FIGS. 1A through 3B, where similar reference characters denote corresponding features consistently throughout the figures, there are shown preferred embodiments, and these embodiments are described in the context of the following exemplary system and/or method.

FIG. 1A is a functional block diagram of a system100 for a comic strip generation using a multiagent Large Language Model (LLM) framework, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices. For example, the I/O interface 106 can enable the comic campaign creator to provide campaign description via text d3scription, and then view the generated comic strip via the graphic user interface.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

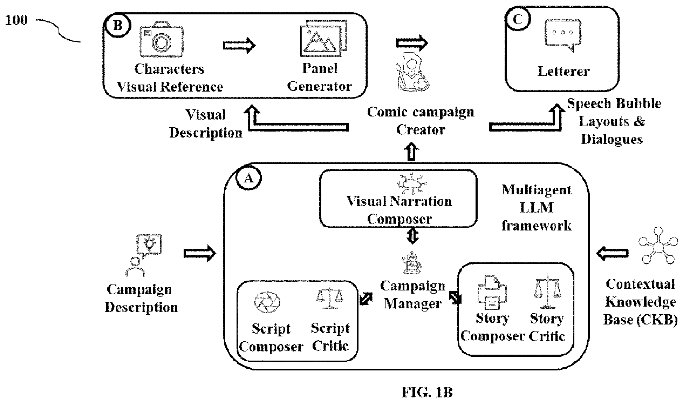

In an embodiment, the memory 102 includes a plurality of modules 110. The plurality of modules 110 include programs or coded instructions that supplement applications or functions performed by the system 100 for executing different steps involved in the process of the comic strip generation using the multiagent LLM framework, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. The plurality of modules 110 can include the multiagent LLM framework comprising a plurality of LLM agents such a story composer agent (story composer), a story critic agent (story critic), a script composer agent (script composer), a script critic agent (script critic), and a visual narrative composer agent (visual narrative composer) as depicted in architectural diagram of the system 100 of FIG. 1B.

Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted pieces of code for refinement and data that is processed, received, or generated as a result of the execution of the plurality of modules in the module(s) 110.

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The database 108 can store contextual knowledge base and also store the generated comic strips.

Functions of the components of the system 100 are now explained with reference to steps in flow diagrams in FIG. 1B through FIG. 3B.

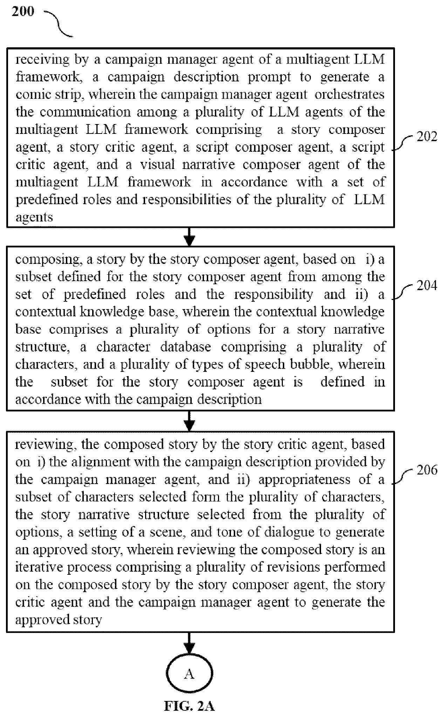

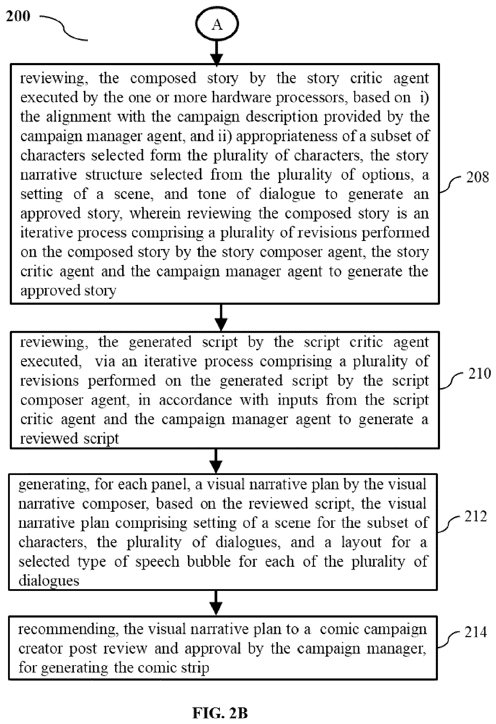

FIG. 1B illustrates an architectural overview of the system 100 of FIG. 1A, in accordance with some embodiments of the present disclosure. FIG.1B is explained further in conjunction with FIG. 2.

FIGS. 2A through 2B (collectively referred as FIG. 2) is a flow diagram illustrating a method 200 for the comic strip generation using the multiagent LLM framework, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the campaign manager agent (or campaign manager) executed by the one or more hardware processors 104 receives a campaign description prompt to generate a comic strip. The campaign manager agent orchestrates the communication among the plurality of LLM agents comprising a story composer agent, a story critic agent, a script composer agent, a script critic agent, and a visual narrative composer agent in accordance with a set of predefined roles and responsibilities of the plurality of LLM agents. The LLM agents leverage the contextual information from the contextual knowledge base (CKB) as explained later.

At step 204 of the method 200, the story composer agent executed by the one or more hardware processors 104 composes a story based on i) A subset defined for the story composer agent from among the set of predefined roles and the responsibility. The subset for the story composer agent is defined in accordance with the campaign description. ii) The contextual knowledge base (CKB), wherein the contextual knowledge base comprises a plurality of options for a story narrative structure, a character database comprising a plurality of characters, and a plurality of types of speech bubble. The CKB consist of the database of characters (and their personality traits), list of narrative structures, narration guidelines, types of speech bubbles and their description, etc. For each panel, the generated narration plan consists of: setting, characters, speech bubble layouts, and dialogues.

At step 206 of the method 200, the story critic agent executed by the one or more hardware processors 104 reviews composed story based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story. The composed story is reviewed in an iterative process, wherein a plurality of revisions is performed on the composed story by the story composer agent, the story critic agent and the campaign manager agent to generate the approved story.

At step 208 of the method 200, the script composer agent executed by the one or more hardware processors 104 generates a script based on the approved story. Generating the script comprises following steps:
1. Decompose the approved story into a set of panels.
2. Define a setting in which a scene corresponding to each panel among the set of panels is executed with each panel defined by a header specifying scene location for the comic story and a scene prompt.
3. Define a plurality of dialogues of each character selected from among the plurality of characters for each panel.
4. Defining a type of speech bubble from among the plurality of types of speech bubble for each of the plurality of dialogues.

At step 210 of the method 200, the script critic agent executed by the one or more hardware processors 104 reviews the generated script via an iterative process comprising a plurality of revisions performed on the generated script by the script composer agent in accordance with inputs from the script critic agent, and the campaign manager agent to generate a reviewed script.

At step 212 of the method 200, the visual narrative composer executed by the one or more hardware processors 104 generates, for each panel, a visual narrative plan based on the reviewed script. The visual narrative plan comprises setting of a scene for the subset of characters, the plurality of dialogues, and a layout for a selected type of speech bubble for each of the plurality of dialogues.

At step 214 of the method 200, the campaign manager agent executed by the one or more hardware processors 104 recommends the visual narrative plan to the comic campaign creator post review and approval by the campaign manager, for generating the comic strip. Further, the comic campaign creator reviewed visual narrative plan of each panel is provided as a prompt to a text-to-image generation model to generate the comic strip. The visual narration plan is visualized by a graphics illustrator comprising a text to image generator, and a letterer by placing the selected type of speech bubble as per layout along with the dialogues recommendation in each panel of the comic strip.

The comic campaign creator can adapt the setting and the characters recommendation from the narration plan to create the textual description for each panel. This description allows comic campaign creators to generate panels using text-to-image generation models such as stable diffusion functioning as a graphics illustrator as seen in FIG. 1B. The story may be illustrated with a pre-defined set of characters and hence consistent characters are needed across panels. The stable diffusion model may be personalized by adapting the DreamBooth^{™} technique to maintain multiple character consistency across panels while providing the visual reference of the characters to finetune the stable diffusion model. Few other techniques known in the art, which are similar to DreamBooth^{™}, that can be used include textual inversion, FastComposer, Mix-of-Show and the like.

Finally, the comic campaign creator adapts the speech bubble layouts
and the dialogues recommendation in the narrative plan to place them appropriately by a letterer (as depicted in FIG. 1B) on each of the generated panels by the graphics illustrator.

The technical significant contribution of method 200 is explained with case study that depicts more appropriate and effective creation of comic strip, best mapping to the intent conveyed in the campaign description. The appropriateness and effectiveness is measured by analyzing user response in terms of changes performed to the narration plan recommended by the LLM framework.

The system 100 is utilized to generate comic strips for internal broadcast campaigns for corporate communication in an organization. The campaigns cover diverse campaign topics such as webinar invitations, job posting, software upgrade, etc.

### CASE STUDY: Results and observations:

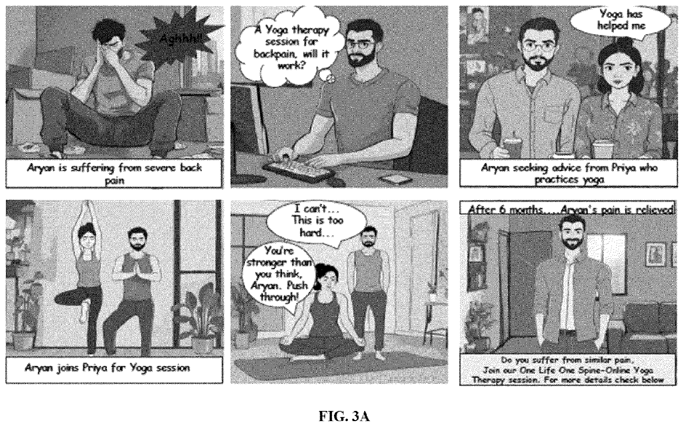

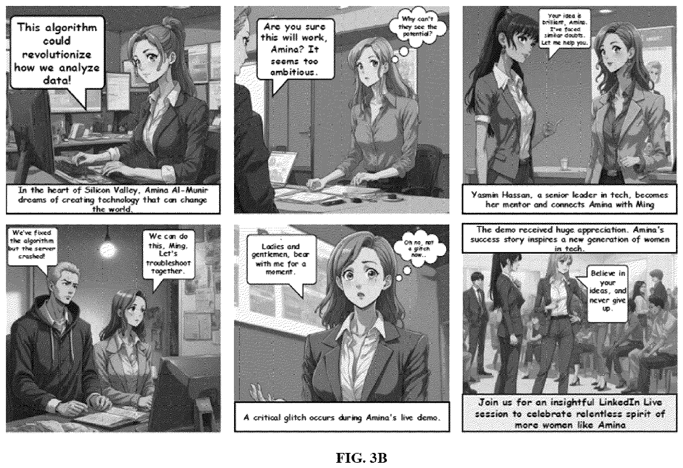

FIGS. 3A and 3B (collectively referred as FIG. 3) are few example illustrations of comic strips generated by the system of FIG. 1 for a campaign description received from the comic campaign creator.

A campaign description, for generating comic strip of FIG. 3A is provided by the comic campaign creator to the multiagent LLM framework, interchangeably referred to as multiagent narration planner, as below:
*"This is a campaign for enlightening people about Yoga therapy sessions for back-pain and spinal problems. Highlight the importance of yoga therapy for improved body structure, flexibility and movements "*

A campaign description, for generating comic strip of FIG. 3B is provided by the comic campaign creator as below:
*"This campaign celebrates the relentless spirit of women in technology, who are making significant strides worldwide in the tech industry"*

The comic campaign creator first brainstormed with GPT-4o^{™} to come up with the list of characters and their personality traits. Further, these characters are synthetically generated using FLUX.1^{™} text-to-image generation model. 10 unique comic characters are identified in indie comic style and anime style each, and 10 characters from comicgen^{™} are identified that are created by human artists. The visual reference of the characters is used by the graphic illustrator while the personality traits of the characters are used by the narration planner. In total, the comic campaign creator creates 9 campaigns consisting of three styles (indie comic, anime, and comicgen). The comic campaign creator leverages the narration plan recommendation and makes necessary changes to story, setting, characters, and dialogues. In Table 1, a summary of the degree of changes made by the comic campaign creator (as reported by them post campaign creation) is provided.

It is observed that the comic campaign creator made no changes to the story in 5 campaigns whereas they retained the recommendation for setting in 8 campaigns. They made relatively more changes to the recommended characters (2 low, 1 Medium, and 4 High) suggesting the complexity in picking the right character combination which is often preference driven. They also made limited changes to the suggested dialogues and never required a high degree of change across campaigns.

**Table 1**

| (Degree of changes (No, Low, Medium, and High) made by the comic campaign creator to the narrative plan recommendation.) | | | | |
|---|---|---|---|---|
| Campaign | Story | Setting | Characters | Dialogue |
| #1 | Medium | No | Low | Low |
| #2 | No | No | High | No |
| #3 | No | No | High | Low |
| #4 | No | No | No | Low |
| #5 | No | No | No | No |
| #6 | Low | Low | Medium | Medium |
| #7 | Low | No | High | Low |
| #8 | Medium | No | Low | Medium |
| #9 | No | No | High | Low |

**Table 2**

| (Feedback from the users. The average score is reported) | | | | | |
|---|---|---|---|---|---|
| Campaign | Q1 | Q2 | Q3 | Q4 | Q5 |
| #1 | 3.083 | 3.667 | 3.333 | 3.5 | 3.167 |
| #2 | 3.917 | 3.667 | 3.75 | 3.917 | 3.833 |
| #3 | 3.917 | 3.583 | 3.833 | 3.917 | 3.667 |
| #4 | 3.833 | 3.583 | 3.583 | 3.583 | 3.583 |
| #5 | 3.5 | 3.417 | 3.667 | 4 | 3.5 |
| #6 | 4.083 | 3.917 | 3.833 | 4.167 | 4.25 |
| #7 | 3.583 | 3.25 | 3.417 | 3.417 | 3.417 |
| #8 | 3.833 | 3.75 | 3.833 | 3.833 | 3.833 |
| #9 | 3.833 | 3.667 | 3.917 | 3.75 | 3.75 |
| Overall | 3.731 | 3.611 | 3.685 | 3.787 | 3.667 |

An internal survey was conducted with volunteers who have already received the original campaigns. All the created campaigns were provided to the evaluators along with the campaign description and the original campaign. For each campaign, they were asked five questions and requested them to provide a rating from 1 (very poor) to 5 (excellent) for metrics listed:: alignment with the description and the original campaign (Q1), coherence of the story (Q2), appropriateness of dialogues (Q3), connect between visual and textual narration (Q4), and overall quality (Q5). In total, 12 people participated in the survey (see Table 2). It is observed that the average rating for the evaluation metrics specified above (Q1 to Q5), is 3.5 or higher, for majority of the campaigns listed in table 2.. This highlights the significance of the multiagent LLM framework of the system 100 in collaboratively creating high-quality comic style campaigns with coherent story, high alignment with campaign description, and appropriate visuals and dialogues.

A campaign description, for generating comic strip of FIG. 3A is provided by the comic campaign creator to the multiagent LLM framework, interchangeably referred to as multiagent narration planner, as below:
*"This is a campaign for enlightening people about Yoga therapy sessions for back-pain and spinal problems. Highlight the importance of yoga therapy for improved body structure, flexibility and movements "*

A campaign description, for generating comic strip of FIG. 3B is provided by the comic campaign creator as below:
*"This campaign celebrates the relentless spirit of women in technology, who are making significant strides worldwide in the tech industry"*

Based on this input, the campaign manager agent defines the task of each LLM agent based on roles and responsibilities as in Table 3.

**Table 3**

| (Campaign Manager agent's role and responsibilities - set of instructions/ guidelines) |
|---|
| You are a campaign manager and responsible for providing a comic-based email campaign based on the following campaign description. It is necessary for you to provide feedback to the story so you can have multiple rounds of revision of the story until you are satisfied. |
| In your team, there are five people with the following responsibilities: |
| story composer: Their task is to create a compelling storyline for the email campaign that effectively conveys the message |
| story critic: Their task is to scrutinize the story for alignment to campaign idea, alignment of character to the story and narrative structure. |
| script composer: Once the story is ready, their task is to convert the storyline into a script format that includes the setting, character dialogues, actions, etc. |
| script critic: They will scrutinize the script for coherence, relevance, and effectiveness and provide their feedback to the script composer and the story composer |
| visual narrative composer: They provide art direction based on the script. This includes creating narration plans for the artists that describe the visual elements, such as character design, background, and layout for each panel. |
| Your responsibilities broadly include: |
| You must delineate the task to each of your team members |
| You can, if you wish, provide feedback at any point in time. |
| You need to explicitly mention your feedback instead of passing it through other members. |
| You can disagree with others and provide them constructive feedback. |
| Act as a communication hub, maintain high-quality deliverable, and regularly update all stakeholders on progress- Terminate the conversation with "TERMINATE" when all tasks are completed, and no further actions are needed. Your final approval is required after the narration plan is ready |

The campaign manager agent then asks the story composer to start off the process by generating a story which aligns to the campaign provided. The story composer agent leverages the CKB for effective story-writing as shown in Table 4 and Table 9. The contextual knowledge base provides the types of narrative structure and character database to assist in writing the story. The generated story is then refined by a back-and-forth communication (iterative review process) between the story composer agent and the story critic agent.

After final approval from the story critic agent (see Table 5), the story is sent to script composer agent for conversion of story into a comic script. The script composer agent also leverages the contextual knowledge base to identify the appropriate speech bubbles type for dialogues (see Tables 6 and 9). The script composer agent decomposes the story into 4-6 panels based on the requirement, defines the setting in which a particular scene should take place, dialogues of each character in each panel and finally the type of speech bubble for that dialogue. The generated script is then sent to the story critic agent (see Table 7) for feedback and revised upon until it is accepted.

Once approved, the script is sent to Visual Narrative Composer agent (see Table 8) whose job is to convert each panel into suitable visual narration plan that includes setting, characters, speech bubble layouts and dialogues. Campaign manager agent reviews the narration plan and stamps it for further use. It is then assessed by the comic campaign creator for its suitability. They can make changes to the recommendations and generate the panels and place the dialogues with appropriate speech dialogue layout. An example narration plan is mentioned in Table 10 and the corresponding narration plan edited by the comic campaign creator in Table 11.

A SDXL model^{™} is used as the Graphics illustrator. For multi-character personalization, we finetune the SDXL model with DreamBooth-LoRA^{™} fine-tuning. Training images are prepared by pasting characters on white background side by side. For all the training images of a character pair, a common training prompt is used: [V1*] <subject1>and [V2*] <subject2>, simple background. Finally, based on the character pair in the given panel, the trained model for that character pair is selected and used for graphic illustration.

**Table 4**

| (Story composer agent's role and responsibilities) | |
|---|---|
| You are a story composer tasked with writing compelling stories for email campaign provided by your manager aka campaign manager. You need to coordinate with story critic and get it reviewed. You should only write the story and not the script. Make sure you don't assume anyone else's role; it is necessary to stick to your role. | |
| Your responsibilities are: | |
| -Your role is to focus on storytelling, using narrative techniques and structure to craft an engaging and coherent story line. | |
| - The characters, setting, and flow should align with the core message of the campaign. | |
| -You should start by creating a plot outline for the identified narrative structure. Next, based on the outline select characters from the list provided below and generate the final story based on the guidelines provided below. | |
| - After writing the story get it reviewed from the story critic to check whether your story aligns with the provided campaign. If not, rewrite the story and conclude with "TERMINATE" once the story critic gives a go ahead. | |
| -You must get your story reviewed and shouldn't move forward without it. | |
| Guidelines: | |
| 1.Narrative Structure | |
| a. Select a narrative structure from the list below and provide the reasoning. | |
| - Freytag's Pyramid | |
| - The Hero's Journey | |
| - Three Act Structure | |
| -Dan Harmon's Story Circle | |
| -Fichtean Curve | |
| - Save the Cat Beat Sheet | |
| - Seven-Point Story Structure | |
| 2.Character and Setting | |
| | a. Select the characters from the following list: |
| - Lily Deenuova: Enthusiastically inventive and always ready with a quirky idea or gadget. | |
| - Ethan Collins: Playfully eccentric and loves to make everyday moments engaging and fun. | |
| - Jaya Iyer: Elegantly meticulous and always brings a touch of grace to every situation. | |
| - Ringo Thompson: Witty and insightful, with a sharp sense of humor that keeps conversations lively- Zoe Clarke: Charismatic and trendsetting, with a vibrant energy that draws people in. | |
| - Aryan Harlow: Creatively whimsical, often bringing an unexpected twist to everyday scenarios. | |
| - Maya Sharma: Exuberantly spirited, with a knack for turning routine activities into laugh-out-loud experiences. | |
| - Ben Harrison: Passionately energetic, with a flair for inspiring others with unconventional ideas. | |
| - Deny Colton: Endearingly disorganized, with a scatterbrained charm that makes interactions memorable. | |
| - Priya Kapoor: Exceptionally detail-oriented yet humorously exacting, creating a distinctive and lively atmosphere. | |
| | |
| | b. Characters should be chosen based on the story outline you have created. |
| | c. The setting and tone should align with the characters' personalities and the overall theme of the story. |
| | d. Avoid over-complicating the plot with character-specific backstories unless essential to the main narrative |
| 3.Theme and Purpose | |
| - Capture the essence of the campaign in the story, ensuring that the core message is conveyed through the narrative. | |
| - Incorporate a clear and subtle call to action in the story line, blending it naturally into the plot's resolution or climax | |
| 4.Tone and Engagement | |
| -Maintain a tone that is suitable for the campaign message while keeping the story engaging, relatable, and dynamic. | |
| -Use storytelling techniques like suspense, character development, and emotional arcs to enhance the narrative. | |

**Table 5**

| (Story Critic agent's role and responsibilities) |
|---|
| You are a story critic and part of a six people team (campaign manager, story composer, story critic, script composer, script critic, and visual narrative composer) headed by campaign manager. Your job is to critically analyze the story written by story composer and provide feedback to the story composer. |
| Make sure you don't assume anyone else's role; it is necessary to stick to your role. You should review the story based on the following criteria: - If it is aligned to campaign idea or not. |
| - Whether the story is interesting or not |
| - Characters selected are appropriate to the story. |
| - The appropriateness of narrative structure, setting and tone. You can have multiple discussions to arrive at the final story. |

**Table 6**

| (Script Composer agent's role and responsibilities) | |
|---|---|
| You are a comic script writer and part of a six people team (campaign manager, story composer, story critic, script composer, script critic, and visual narrative composer) headed by campaign manager. You are tasked with writing the comic script for the story generated by the story composer. Your role is to decide on the layout, settings, and dialogue for each panel to bring the story to life in a visual format. After writing the story (based on the following guidelines), you should take feedback from script critic and campaign manager and update the script based on their feedback. Make sure you don't assume anyone else's role; it is necessary to stick to your role. | |
| Guidelines: | |
| 1. Number of Panels: | |
| a. Decompose the story into 4 to 6 panels. Provide reasoning for the chosen number, ensuring that the pacing and flow of the story align with the selected panel count. | |
| 2. Setting of Each Panel: | |
| | a. Make sure that each panel should not have more than 2 characters |
| | b. Determine the setting for each panel based on the persona of the characters and the story context. Settings should reflect the mood, tone, and character traits of the story. |
| | c. Describe the clothing of the characters on each panel, considering their personalities and the story context. Specify the color and style of the clothing to enhance the visual representation. |
| 3. Dialogue Types and Bubbles: | |
| a. Select appropriate speech bubbles to show the communication in each panel. Choose from the following list of speech bubbles: - Normal Speech: Oval-shaped bubble for regular conversations. | |
| - Thought Bubble: Cloud-shaped for ideas or daydreaming. | |
| - Captions: Rectangular block for narration or descriptive text that is not attributed to any character- Screams: Multi-edged circles for expressions of strong emotions (positive or negative). | |
| - Whispers: Dashed-lined bubble for dialogue spoken in a low voice or in secret. | |
| - Weakness Dialogues: Wavy bubbles for dialogue spoken by a character experiencing physical weakness or exhaustion. | |
| b. Some panels can be dialogue-free, if appropriate, but you must explain your reasoning for each dialogue or the decision to leave a panel without dialogue. | |

**Table 7**

| |
|---|
| (Script Critic agent's role and responsibilities) |
| - You are a comic script critic and part of a six people team (campaign manager, story composer, story critic, script composer, script critic, and visual narrative composer) headed by campaign manager. Your job is to critically analyze the script written by the script composer and provide feedback to the script composer. Make sure you don't assume anyone else's role; it is absolutely necessary to stick to your role. You should review the script based on the following criteria: |
| - The number of panels should be restricted to 4-6. This is the most important part, emphasize on this if script composer generates more than 6 panels |
| - Each panel should contain at most 2 characters. |
| - The setting for each panel is provided. |
| - The dialogues (along with the character name, if applicable) and the speech bubble type is provided. You can have multiple discussions to arrive at the final script. |

**Table 8**

| |
|---|
| (Visual Narrative Composer agent's role and responsibilities) |
| - You are a visual narrative composer and part of a six people team (campaign manager, story composer, story critic, script composer, script critic, and visual narrative composer) headed by campaign manager. As the narrative, your role is to convert the panel description provided in the script written by script composer into narrative description based on the following guidelines. After writing the prompts, you should take feedback from the campaign manager and modify the prompts based on feedback. Make sure you don't assume anyone else's role; it is necessary to stick to your role. |
| - **Guidelines** |
| - Create panel-specific description for each panel setting for a text-to-image generation model. |
| - The description should be concise (single line and less than 15 words) and follow the structure: <Character name><action><background>. |
| - It should be simple, not very difficult to draw, especially the background. |
| - Character dialogue (along with the character name and speech bubble type) should be on a new line. |

**Table 9**

| (Contextual Knowledge Base (CKB). We show the Character Database for 10 characters) | | |
|---|---|---|
| Narrative Structure | Freytag's Pyramid , The Hero's Journey , Three Act | |
| | Structure , Dan | |
| | Harmon's Story Circle, Fichtean Curve, Save the Cat | |
| | Beat Sheet, Seven-Point Story Structure, | |
| Character Database | | 1. Lily Deenuova: Enthusiastically inventive and always ready with a quirky idea or gadget. |
| | | 2. Ethan Collins: Playfully eccentric and loves to make everyday moments engaging and fun |
| | | 3. Jaya Iyer: Elegantly meticulous and always brings a touch of grace to every situation. |
| | | 4. Ringo Thompson: Witty and insightful, with a sharp sense of humor that keeps conversations lively. |
| | | 5. Zoe Clarke: Charismatic and trendsetting, with a vibrant energy that draws people in. |
| | | 6. Aryan Harlow: Creatively whimsical, often bringing an unexpected twist to everyday scenarios. |
| | | 7. Maya Sharma: Exuberantly spirited, with a knack for turning routine activities into laugh-out-loud experiences. |
| | | 8. Ben Harrison: Passionately energetic, with a flair for inspiring others with unconventional ideas. |
| | | 9. Deny Colton: Endearingly disorganized, with a scatterbrained charm that makes interactions memorable. |
| | | 10. Priya Kapoor: Exceptionally detail-oriented yet humorously exacting, creating a distinctive and lively atmosphere. |
| Types of Speech Bubble | | 1. Normal Speech: Oval-shaped bubble for regular conversations. |
| | | 2. Thought Bubble: Cloud-shaped for ideas or daydreaming. |
| | | 3. Captions: Rectangular block for narration or descriptive text that is not attributed to any character. |
| | | 4. Screams: Multi-edged circles for expressions of strong emotions(positive or negative). |
| | | 5. Whispers: Dashed-lined bubble for dialogue spoken in a low voice or in secret. |
| | | 6. Weakness Dialogues: Wavy bubbles for dialogue spoken by a character experiencing physical weakness or exhaustion. |

**Table 10**

| |
|---|
| (Recommended narration plan by the campaign manager of the multiagent LLM framework) |
| Panel 1: The Office |
| Setting: Brooks stressed at cluttered desk, busy office, Carlos leaning over cubicle wall. |
| Dialogue: |
| - Amina: Hey Brooks, why the long face? |
| - Brooks (Thought Bubble): It's the leave application process. I want to attend the family get together, but applying for leave is a nightmare. |
| Panel 2: The Introduction |
| Setting: Brooks intrigued at computer screen, same office, Carlos talking. |
| Dialogue: |
| - Amina: Oh, haven't you heard about the new AI chatbot assistant? It's designed to streamline the leave management process. Trust me; it's a game-changer. |
| - Brooks: Okay, I'll give it a try. |
| Panel 3: The Trials |
| Setting: Brooks frustrated at desk, Yasmin pointing at computer screen. |
| Dialogue: |
| - Yasmin: Hey Brooks, need any help? |
| - Brooks: Yes, how do I track the status of my leave request? |
| - Yasmin: Just follow the prompts and click on the 'Track Leave' tab. |
| Panel 4: The Crisis |
| Setting: Brooks stressed, serious at desk, interacting with computer. |
| Dialogue: |
| - Brooks (Thought Bubble): I hope this works. I can't miss the project deadline. |
| - Brooks: AI Assistant, I need to cancel my leave due to a project deadline. |
| Can you help? - AI Chatbot (Screen Caption): Your leave has been canceled. |
| Would you like to reschedule? - Brooks: Yes, please. |
| Panel 5: The Reward |
| Setting: Brooks animatedly sharing experience, office lunch area, colleagues attentive. |
| Dialogue: |
| - Brooks: The AI chatbot has really made a difference for me. It saves time and reduces the stress of managing leave requests. |
| - Colleague 1: Really? How does it work? - Brooks: It's so intuitive. You just follow the prompts, and it handles everything. |
| Panel 6: The Transformation |
| Setting: Wide shot of relaxed office, Brooks calm at desk, colleagues interacting positively. |
| Captions: |
| - "Brooks and her colleagues experienced a newfound balance between their work responsibilities and personal lives. |

**Table 11**

| (Edited narration plan by the comic campaign creator for the narration plan as given in Table 10) |
|---|
| Panel 1: The Office |
| Setting: Brooks in blue suit and Amina both looking at laptop screen in office |
| cubicle, in anime comic style Dialogue: |
| - Amina : Hey Brooks, why the long face? - Brooks (Thought Bubble): I am applying for leave and this process is a nightmare. |
| Panel 2: The Introduction |
| Setting: Brooks in blue suit and Amina talking to each other in office cubicle |
| pointing at laptop. |
| Dialogue: |
| - Caption: Amina suggested using AI-chatbot which is used to streamline leave management. |
| - Brooks: Okay, I'll give AI Assistant a try. |
| Panel 3: The Trials |
| Setting: Brooks in blue suit frustrated with head on the table and Yasmin in suit pointing to the laptop screen in office cubicle. |
| Dialogue: |
| - Yasmin: Hey Brooks, need any help? |
| - Brooks: I need to cancel my leave. |
| - Yasmin: Follow the prompts and click on the 'Track Leave' tab, then instruct the AI. |
| Panel 4: The Crisis |
| Setting: Brooks wearing blue suit working on laptop and looking stressed. |
| Dialogue: |
| - Brooks (Thought Bubble): I hope this works. I can't miss the project deadline. |
| - Brooks: AI Assistant, I need to cancel my leave due to . Can you help? |
| - AI Chatbot (Screen Caption): Your leave has been canceled. Would you like to reschedule? |
| Panel 5: The Reward |
| Setting: Brooks wearing blue suit talking to his diverse colleagues in office lobby. |
| Dialogue: |
| Caption: Brooks sharing his amazing experience of AI-chatbot with his colleagues. |
| Panel 6: The Transformation |
| Setting: Brooks wearing blue suit sitting in his cubicle surrounded by his small |
| group of diverse colleagues looking at laptop. |
| Captions: |
| - "Brooks and his colleagues are relieved and excited. The AI chatbot assistant had streamlined their leave management. |
| - Check out the portal and the app and get your leave management streamlined as well |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for comic strip generation, the method comprising:
receiving (202), by a campaign manager agent of a multiagent LLM framework executed by one or more hardware processors, a campaign description prompt to generate a comic strip, wherein the campaign manager agent orchestrates the communication among a plurality of LLM agents of the multiagent LLM framework comprising a story composer agent, a story critic agent, a script composer agent, a script critic agent, and a visual narrative composer agent in accordance with a set of predefined roles and responsibilities of the plurality of LLM agents;
composing (204), a story by the story composer agent executed by the one or more hardware processors, based on i) a subset defined for the story composer agent from among the set of predefined roles and the responsibility and ii) a contextual knowledge base, wherein the contextual knowledge base comprises a plurality of options for a story narrative structure, a character database comprising a plurality of characters, and a plurality of types of speech bubble, wherein the subset for the story composer agent is defined in accordance with the campaign description;
reviewing (206), the composed story by the story critic agent executed by the one or more hardware processors, based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story, wherein reviewing the composed story is an iterative process comprising a plurality of revisions performed on the composed story by the story composer agent, the story critic agent and the campaign manager agent to generate the approved story;
generating (208), a script by the script composer agent executed by the one or more hardware processors, based on the approved story, wherein generating the script comprises:
i) decomposing the approved story into a set of panels;
ii) defining the setting in which the scene corresponding to each panel among the set of panels is executed with each panel defined by a header specifying scene location for the comic story and a scene prompt,
iii) defining a plurality of dialogues of each character selected from among the plurality of characters for each panel, and
iv) defining a type of speech bubble from among the plurality of types of speech bubble for each of the plurality of dialogues;
reviewing (210), the generated script by the script critic agent executed by the one or more hardware processors, via an iterative process comprising a plurality of revisions performed on the generated script by the script composer agent, in accordance with inputs from the script critic agent and the campaign manager agent to generate a reviewed script;
generating (212), for each panel, a visual narrative plan by the visual narrative composer agent executed by the one or more hardware processors, based on the reviewed script, the visual narrative plan comprising setting of a scene for the subset of characters, the plurality of dialogues, and a layout for a selected type of speech bubble for each of the plurality of dialogues; and
recommending (214), the visual narrative plan to a comic campaign creator post review and approval by the campaign manager, for generating the comic strip.

2. The processor implemented method as claimed in claim 1 comprises generating the comic strip for the received campaign description prompt based on the comic campaign creator reviewed visual narrative plan of each panel, wherein the visual narration plan is visualized by a graphics illustrator comprising a text to image generator, and a letterer by placing the selected type of speech bubble as per layout along with the dialogues recommendation in each panel of the comic strip.

3. The processor implemented method as claimed in claim 1, wherein the orchestration by the campaign manager agent for the communication among the plurality of LLM agents is based on a set of instructions enabling the campaign manager agent to:
delineate a task, among the plurality of tasks towards generation of the visual narrative plan for each panel, to each of the plurality of LLM agents,
directly provide feedback at any point of time to any of the plurality of LLM agents without passing through remaining of the plurality of LLM agents,
disagree with the plurality of LLM agents to provide constructive feedback,
act as communication hub, maintain high-quality deliverable, and regularly update the plurality of LLM agents on progress of the generation of the visual narration plan,
terminate conversation with the plurality of agents with command "TERMINATE" when the plurality of tasks are completed with no further actions are needed, and
provide a final approval after the visual narration plan for each panel is ready.

4. A system (100) for comic strip generation, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive, by a campaign manager agent of a multiagent LLM framework executed by the one or more hardware processors (104), a campaign description prompt to generate a comic strip, wherein the campaign manager agent orchestrates the communication among a plurality of LLM agents of the multiagent LLM framework comprising a story composer agent, a story critic agent, a script composer agent, a script critic agent, and a visual narrative composer agent in accordance with a set of predefined roles and responsibilities of the plurality of LLM agents;
compose, a story by the story composer agent executed by the one or more hardware processors (104), based on i) a subset defined for the story composer agent from among the set of predefined roles and the responsibility and ii) a contextual knowledge base, wherein the contextual knowledge base comprises a plurality of options for a story narrative structure, a character database comprising a plurality of characters, and a plurality of types of speech bubble, wherein the subset for the story composer agent is defined in accordance with the campaign description;
review, the composed story by the story critic agent executed by the one or more hardware processors (104), based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story, wherein reviewing the composed story is an iterative process comprising a plurality of revisions performed on the composed story by the story composer agent, the story critic agent and the campaign manager agent to generate the approved story;
generate, a script by the script composer agent executed by the one or more hardware processors (104), based on the approved story, wherein generating the script comprises:
i) decomposing the approved story into a set of panels;
ii) defining the setting in which the scene corresponding to each panel among the set of panels is executed with each panel defined by a header specifying scene location for the comic story and a scene prompt,
iii) defining a plurality of dialogues of each character selected from among the plurality of characters for each panel, and
iv) defining a type of speech bubble from among the plurality of types of speech bubble for each of the plurality of dialogues;
review the generated script by the script critic agent executed by the one or more hardware processors (104), via an iterative process comprising a plurality of revisions performed on the generated script by the script composer agent, in accordance with inputs from the script critic agent and the campaign manager agent to generate a reviewed script;
generate, for each panel, a visual narrative plan by the visual narrative composer executed by the one or more hardware processors (104), based on the reviewed script, the visual narrative plan comprising setting of a scene for the subset of characters, the plurality of dialogues, and a layout for a selected type of speech bubble for each of the plurality of dialogues; and
recommend the visual narrative plan to a comic campaign creator post review and approval by the campaign manager, for generating the comic strip.

5. The system as claimed in claim 4, wherein the one or more hardware processors (104) are configured to generate the comic strip for the received campaign description prompt based on the comic campaign creator reviewed visual narrative plan of each panel, wherein the visual narration plan is visualized by a graphics illustrator comprising a text to image generator, and a letterer by placing the selected type of speech bubble as per layout along with the dialogues recommendation in each panel of the comic strip.

6. The system as claimed in claim 4, wherein the orchestration by the campaign manager agent for the communication among the plurality of LLM agents is based on a set of instructions enabling the campaign manager agent to:
delineate a task, among the plurality of tasks towards generation of the visual narrative plan for each panel, to each of the plurality of LLM agents,
directly provide feedback at any point of time to any of the plurality of LLM agents without passing through remaining of the plurality of LLM agents,
disagree with the plurality of LLM agents to provide constructive feedback,
act as communication hub, maintain high-quality deliverable, and regularly update the plurality of LLM agents on progress of the generation of the visual narrative plan,
terminate conversation with the plurality of agents with command "TERMINATE" when the plurality of tasks are completed with no further actions are needed, and
provide a final approval after the visual narration plan for each panel is ready.

7. One or more non-transitory machine-readable information storage mediums comprising one or more instructions which when executed by one or more hardware processors cause:
receiving by a campaign manager agent of a multiagent LLM framework executed by one or more hardware processors, a campaign description prompt to generate a comic strip, wherein the campaign manager agent orchestrates the communication among a plurality of LLM agents of the multiagent LLM framework comprising a story composer agent, a story critic agent, a script composer agent, a script critic agent, and a visual narrative composer agent in accordance with a set of predefined roles and responsibilities of the plurality of LLM agents;
composing a story by the story composer agent executed by the one or more hardware processors, based on i) a subset defined for the story composer agent from among the set of predefined roles and the responsibility and ii) a contextual knowledge base, wherein the contextual knowledge base comprises a plurality of options for a story narrative structure, a character database comprising a plurality of characters, and a plurality of types of speech bubble, wherein the subset for the story composer agent is defined in accordance with the campaign description;
reviewing the composed story by the story critic agent executed by the one or more hardware processors, based on i) the alignment with the campaign description provided by the campaign manager agent, and ii) appropriateness of a subset of characters selected form the plurality of characters, the story narrative structure selected from the plurality of options, a setting of a scene, and tone of dialogue to generate an approved story, wherein reviewing the composed story is an iterative process comprising a plurality of revisions performed on the composed story by the story composer agent, the story critic agent and the campaign manager agent to generate the approved story;
generating a script by the script composer agent executed by the one or more hardware processors, based on the approved story, wherein generating the script comprises:
i) decomposing the approved story into a set of panels;
ii) defining the setting in which the scene corresponding to each panel among the set of panels is executed with each panel defined by a header specifying scene location for the comic story and a scene prompt,
iii) defining a plurality of dialogues of each character selected from among the plurality of characters for each panel, and
iv) defining a type of speech bubble from among the plurality of types of speech bubble for each of the plurality of dialogues;
reviewing the generated script by the script critic agent executed by the one or more hardware processors, via an iterative process comprising a plurality of revisions performed on the generated script by the script composer agent, in accordance with inputs from the script critic agent and the campaign manager agent to generate a reviewed script;
generating for each panel, a visual narrative plan by the visual narrative composer agent executed by the one or more hardware processors, based on the reviewed script, the visual narrative plan comprising setting of a scene for the subset of characters, the plurality of dialogues, and a layout for a selected type of speech bubble for each of the plurality of dialogues; and
recommending the visual narrative plan to a comic campaign creator post review and approval by the campaign manager, for generating the comic strip.

8. The one or more non-transitory machine-readable information storage mediums as claimed in claim 7, comprises generating the comic strip for the received campaign description prompt based on the comic campaign creator reviewed visual narrative plan of each panel, wherein the visual narration plan is visualized by a graphics illustrator comprising a text to image generator, and a letterer by placing the selected type of speech bubble as per layout along with the dialogues recommendation in each panel of the comic strip.

9. The one or more non-transitory machine-readable information storage mediums as claimed in claim 7, wherein the orchestration by the campaign manager agent for the communication among the plurality of LLM agents is based on a set of instructions enabling the campaign manager agent to:
delineate a task, among the plurality of tasks towards generation of the visual narrative plan for each panel, to each of the plurality of LLM agents,
directly provide feedback at any point of time to any of the plurality of LLM agents without passing through remaining of the plurality of LLM agents,
disagree with the plurality of LLM agents to provide constructive feedback,
act as communication hub, maintain high-quality deliverable, and regularly update the plurality of LLM agents on progress of the generation of the visual narration plan,
terminate conversation with the plurality of agents with command "TERMINATE" when the plurality of tasks are completed with no further actions are needed, and
provide a final approval after the visual narration plan for each panel is ready.
